# FASCICULE DE BREVET EUROPEEN

(11) **EP 1 158 148 B1**
(45) Date de publication et mention de la délivrance du brevet: **28.06.2006**
(21) Numéro de dépôt: 01401358.5
(22) Date de dépôt: 23.05.2001
(51) Int. Cl.: F02D 19/12

(54) **Procédé d'addivation de carburant**
Verfahren zur Kraftstoffzusatzzusammensetzung
Fuel additive method

(30) Priorité: 26.05.2000 FR 0006752
(43) Date de publication de la demande: 28.11.2001
(73) Titulaire: Renault s.a.s., 92100 Boulogne Billancourt (FR)
(72) Inventeur: Archimbaud, Marie Laure, 75010 Paris (FR); Hekimian, Georgers, 92500 Levallois (FR)

(56) Documents cités:
- FR-A- 2 668 203
- FR-A- 2 759 737
- GB-A- 2 176 842
- US-A- 4 727 827
- US-A- 5 421 295

## Description

La présente invention concerne la dépollution des moteurs à combustion interne associés à un filtre à particules.

Elle trouve une application façon privilégiée, mais non exclusive dans la dépollution des moteurs Diesel.

Plus précisément, cette invention concerne un procédé d'additivation directe du carburant consommé par un moteur à combustion interne associé à une ligne d'échappement munie d'un filtre à particules, reposant sur le suivi du niveau de carburant dans son réservoir, et sur l'actionnement d'une pompe injectant de l'additif dans le réservoir de carburant.

Le filtre à particules permet de collecter les particules à l'échappement du moteur. Périodiquement il doit être régénéré en brûlant les suies accumulées dans celui-ci. La température de combustion des suies accumulées dans le filtre à particules, de l'ordre de 550° C en l'absence de disposition particulière, peut être difficile à obtenir avec certains moteurs Diesel.

Par ailleurs, le filtre à particules doit être lavé après un certain nombre de régénérations, pour enlever les résidus de combustion accumulés à chaque régénération.

Pour abaisser la température de combustion des suies, jusqu'à une valeur qui soit facilement atteinte dans les gaz d'échappement d'un moteur Diesel, il est connu d'ajouter au carburant un additif.

L'additivation du carburant peut s'effectuer en pulvérisant l'additif dans les gaz d'échappement en amont du filtre à particules, mais cette première méthode n'autorise pas une intégration suffisante de l'additif aux particules de suies, et réduit de ce fait son efficacité.

On peut aussi introduire l'additif dans l'air frais admis dans le moteur, mais cette seconde méthode se heurte à des difficultés de dosage très contraignantes pour sa mise en oeuvre.

Une autre technique d'additivation connue consiste à utiliser la ligne de retour des injecteurs, sous réserve que le débit de retour soit suffisant pour entraîner l'additif. Cette méthode assure le brassage de l'additif avec le carburant. Toutefois, il est difficile de garantir que la condition liée au débit de retour soit satisfaite en permanence.

L'expérience a donc conduit à privilégier l'ajout direct de l'additif dans le carburant, cette dernière méthode permettant d'obtenir dans les meilleures conditions la précision de dosage et l'efficacité requises pour la régénération du filtre à particules.

L'additivation directe du carburant peut par exemple être déclenchée lorsqu'on détecte le remplissage du réservoir de carburant.

Selon une solution connue, cette détection est confiée à un capteur d'ouverture de la trappe de carburant. Toutefois, ce mode de détection, qui repose sur un capteur spécifique, est mis en échec en cas de défaillance de ce dernier, ou lorsque la trappe d'origine est remplacée en après-vente par une nouvelle trappe dépourvue de capteur.

Par ailleurs, la régénération du filtre à particules requiert un dosage très précis de l'additif dans le carburant pour les raisons suivantes. Etant donné que l'additif sert à abaisser le seuil de température requis pour brûler les suies accumulées dans le filtre à particules, un défaut d'additif dans le carburant ne permettra pas au moteur Diesel de porter les gaz d'échappement jusqu'à la température de régénération. A l'inverse, un excès d'additif augmentera la masse de résidus de combustion accumulée à chaque régénération dans le filtre, et il sera nécessaire de « laver » celui-ci plus tôt.

Dans la pratique, la mise en échec, même temporaire, de la stratégie de déclenchement de l'additivation, ainsi que des écarts de dosage de l'additif ne sont pas tolérables, car ces facteurs ont des conséquences néfastes sur la régénération du filtre à particules.

Pour supprimer tout risque de cet ordre, l'invention propose que le déclenchement de l'additivation et le dosage de l'additif soient contrôlés de manière à obtenir, au moment voulu et avec la précision requise, la concentration optimale d'additif dans le carburant, sans pour autant recourir à un capteur spécifique d'ouverture de trappe.

Dans ce but, elle propose que la pompe soit actionnée lorsqu'un remplissage significatif de carburant est détecté par comparaison d'un ancien niveau conservé en mémoire, avec un nouveau niveau de carburant évalué en sortie de ralenti.

Conformément à une réalisation préférée de l'invention, l'ancien niveau de carburant est réactualisé lorsque le ralenti est conservé pendant une durée déterminée, et mis en mémoire lors de la coupure du contact.

De préférence, l'ancien niveau de carburant est sauvegardé en mémoire morte après la coupure du moteur.

L'invention sera mieux comprise à la lecture de la description suivante d'un mode de réalisation particulier de celle-ci, en liaison avec les dessins annexés, sur lesquels :
- la figure 1 est un schéma du dispositif utilisé, et
- la figure 2, est un diagramme fonctionnel des principales étapes du procédé de l'invention.

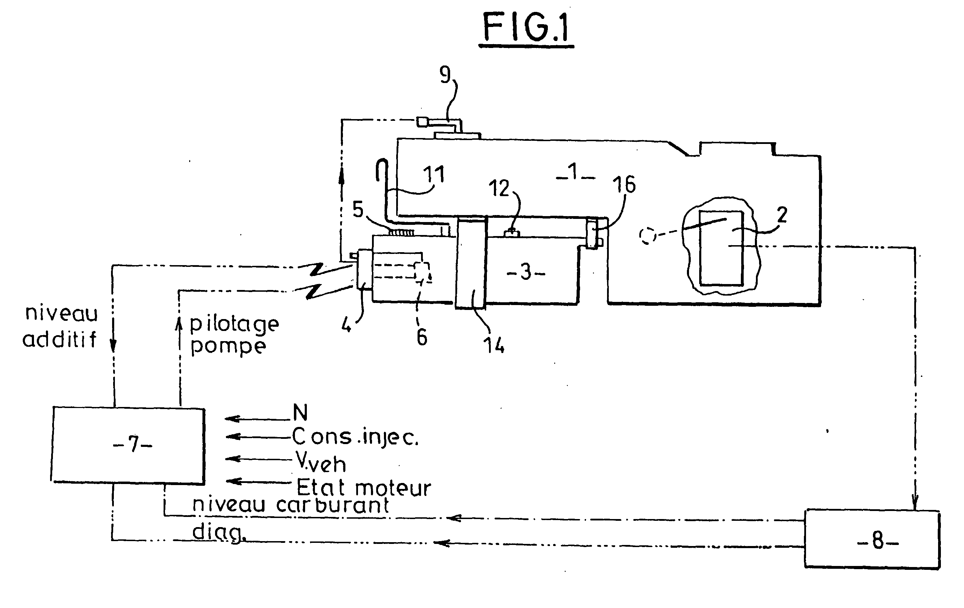

Sur la figure 1, dépourvue de tout caractère limitatif, on a représenté schématiquement le réservoir de carburant 1 d'un véhicule, muni d'une jauge de niveau de carburant 2. Le réservoir d'additif 3, disposé sous le réservoir de carburant 2, contient une pompe micro-doseuse 4, un bouchon 5 et une thermistance 6 chargée de détecter un niveau bas d'additif. Le calculateur de contrôle moteur 7, qui contrôle l'additivation, est relié électriquement à la thermistance 6, dont il reçoit une information niveau d'additif, et à la pompe 4 dont il contrôle le fonctionnement. Il récupère, par exemple par voie multiplexée, l'information niveau de carburant à partir du tableau de bord 8, qui tient lui même cette information de la jauge de niveau de carburant 2.

L'additif est injecté du réservoir d'additif 3 dans le réservoir de carburant 1 par une platine d'injection 9, montée par exemple dans la partie supérieure de celui-ci. Le système comporte également système 11 (valve et tuyau) de mise à l'air libre du réservoir d'additif 3, et un clapet de pression et de dépression 12. Enfin, on a fait apparaître sur le schéma des moyens de fixation du réservoir d'additif 3 sous le réservoir de carburant 1, tels qu'une bande et une tête de fixation 14, 16.

Outre le niveau de carburant récupéré par le tableau de bord 8 et l'état du réservoir d'additif indiqué par la thermistance 6, le calculateur 7 reçoit les informations suivantes :
- le régime moteur N,
- la vitesse de déplacement du véhicule Vᵥₑₕ,
- la consommation de carburant vue par les injecteurs (conso inj),
- l'information d'état de ralenti ou de coupure du moteur (état moteur), et
- le diagnostic de la jauge 2 par le tableau de bord 8 (diag),

En sortie, le calculateur 7 émet une consigne de pilotage de la pompe de micro-doseuse 4 assurant l'injection de l'additif dans le carburant.

Par ailleurs, le procédé de l'invention exploite les paramètres suivants conservés en mémoire dans le calculateur :
- le dernier niveau de carburant moyenné avant la coupure du contact,
- le volume total d'additif utilisé depuis le dernier remplissage d'additif, obtenu par intégration du nombre de coups de pompe dans le temps, connaissant la cylindrée de la pompe,
- la consommation totale de carburant vue depuis les injecteurs depuis la dernière additivation,
- la quantité restant à additiver, si le moteur est coupé en cours d'additivation,
- le volume total d'additif utilisé depuis le dernier lavage du filtre à particules, et
- une information indiquant si un remplissage de carburant a été détecté.

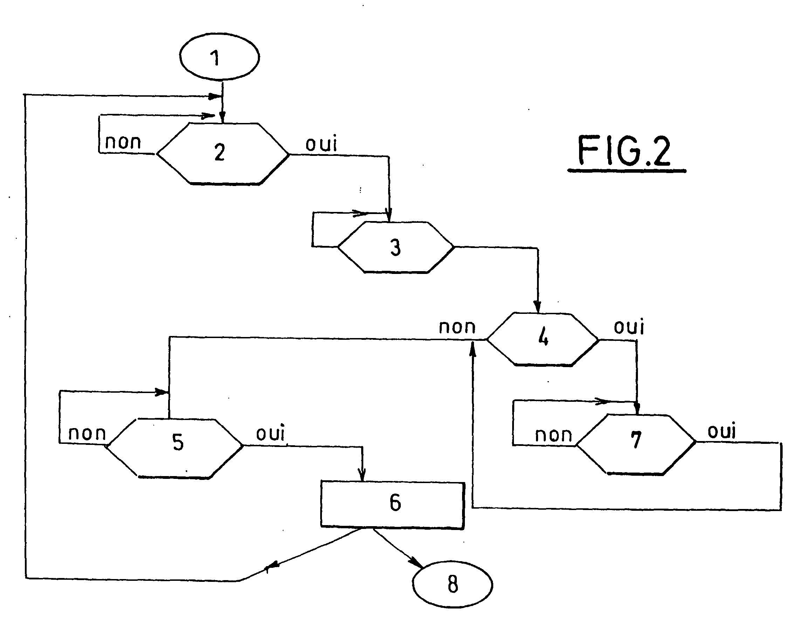

Sur la figure 2, on a mentionné comme étape 1 le démarrage du véhicule, considéré donc comme étape initiale, quoique la stratégie proposée soit conçue pour détecter tous les remplissages de carburant, c'est à dire aussi bien ceux qui sont effectués moteur tournant au ralenti que moteur coupé.

Comme indiqué plus haut, cette stratégie repose sur le suivi en continu du niveau de carburant dans le réservoir 1 lors du fonctionnement moteur et sur la mise en route de la pompe 4, lorsque la quantité de carburant ajoutée dépasse un seuil de remplissage déterminé, par exemple de cinq litres.

Ce dépassement est détecté en comparant (cf. étape 4) un nouveau niveau de carburant, acquis dans l'étape 3 à l'occasion de la dernière sortie du ralenti (cf. étape 2), avec un ancien niveau de carburant mis en mémoire précédemment.

L'acquisition du nouveau niveau de carburant (cf. étape 3), est effectuée systématiquement à chaque sortie du ralenti, après un démarrage ou non, de façon à détecter les remplissages effectués moteur coupé, et ceux qui ont pu être effectués sans couper le contact, c'est à dire moteur tournant au ralenti.

L'ancien niveau de carburant est une valeur moyenne calculée et mise en mémoire (cf. étape 6) juste après le passage au ralenti ou la coupure du contact (cf. étape 5), la seule différence étant que si le remplissage est effectué moteur arrêté, l'ancien niveau pris en compte est une valeur sauvegardée pendant la coupure du moteur. Cette valeur est chargée dans la valeur de l'ancien niveau de carburant uniquement en cas de redémarrage du moteur.

Si le seuil de remplissage a été détecté dans l'étape 4, le calculateur 7 pilote la pompe 3 pendant le temps nécessaire à l'obtention de la concentration désirée d'additif dans le carburant (cf. étape 7).

Enfin, la stratégie est interrompue lors de la coupure du contact, qui entraîne la sauvegarde en mémoire morte de la dernière valeur moyenne calculée, comme ancien niveau (cf. étape 8).

Conformément à l'invention, l'ancien niveau conservé en mémoire morte est exploité pour détecter un remplissage effectué moteur coupé, donc suivi d'un redémarrage, alors que cette même valeur sera écartée au profit de la dernière valeur moyenne calculée, si on sort du ralenti de façon non consécutive à une coupure du contact, de façon à détecter les remplissages effectués moteur tournant.

La durée de l'additivation peut être déterminée par exemple à partir du volume d'additif v à ajouter pour obtenir la concentration souhaitée, de la cylindrée de la pompe X, et de sa fréquence d'activation f, de la façon suivante.

Selon une formule connue, v = 0,0036 x 0,84 x Y x d, où 0,84 représente la masse volumique du carburant, Y la concentration souhaitée d'additif, et d le volume de carburant ajouté. Connaissant X, f, Y et d, on en déduit le temps d'additivation nécessaire t = v/X/f

Pour détecter le niveau bas d'additif, l'invention propose d'utiliser de façon non limitative deux moyens différents, en parallèle ou non. Le premier moyen est le suivi dans le temps de la tension électrique délivrée par le capteur de niveau minimum (thermistance 6), dont la variation traduit l'évolution des échanges thermiques liée à son émergence hors de l'additif.

Le second moyen consiste à calculer par intégration le nombre de coups donnés par la pompe 4, de multiplier ce nombre par sa cylindrée de façon à connaître le volume total d'additif utilisé, d'en déduire par différence avec le volume total du réservoir 3 le volume restant dans celui-ci, et de comparer ce résultat à un seuil.

Pour contrôler l'additivation sur la base d'une information de consommation de carburant exacte, même en cas de blocage de la pompe ou si certains remplissages de carburant n'ont pas été détectés, l'invention propose les mesures de secours suivantes. Puisqu'on connaît en permanence la valeur de la consommation de carburant vue par les injecteurs, on peut évaluer le volume de carburant en intégrant cette valeur. Dès que le volume calculé dépasse la capacité maximale du réservoir de carburant majorée d'un seuil de sauvegarde, bien qu'aucun remplissage n'ait été détecté, donc qu'aucune additivation n'ait eu lieu, le calculateur déclenche l'additivation manquante, en prenant pour base de calcul du volume d'additif injecté, la capacité du réservoir de carburant majorée. Cette stratégie de secours permet aussi d'imposer une additivation « forfaitaire » si la jauge 2 est bloquée.

Comme indiqué plus haut, l'invention exploite lors du redémarrage certains paramètres, dont la dernière valeur a été conservée en mémoire morte dans le calculateur après l'arrêt du moteur.

Il s'agit du dernier niveau de carburant, calculé avant l'expiration du délai nécessaire pour la mise en mémoire des informations dans le calculateur (« powerlatch ») après la coupure du moteur, cet ancien niveau étant réintroduit dans la boucle de commande dans l'étape 1 de la figure 2.

Le volume total d'additif utilisé depuis le dernier plein du réservoir d'additif, calculé par exemple selon la méthode indiquée plus haut, et remise à zéro lors du plein du réservoir d'additif, peut également être conservé en mémoire pour pouvoir prévoir le remplissage du réservoir d'additif et le niveau restant dans celui-ci.

La quantité d'additif restant à injecter si l'opération est interrompue avant sa fin par la coupure du moteur, sera elle aussi conservée pour pouvoir compléter l'additivation au redémarrage suivant.

La valeur du volume total d'additif consommé, réinitialisée lors du lavage du filtre à particules, est elle aussi intéressante à conserver en mémoire, car elle permet de déterminer la quantité de résidus accumulés dans le filtre depuis le dernier lavage.

Enfin, il est très avantageux de sauvegarder l'état d'un commutateur à deux positions, activé par exemple dans son « état 1 » lorsqu'un remplissage de carburant est détecté, car cette information permet de remettre à zéro la variable consommation totale de carburant vue par les injecteurs (valeur également conservée en mémoire).

## Revendications

1. Procédé d'additivation directe du carburant consommé par un moteur à combustion interne associé à une ligne d'échappement munie d'un filtre à particules, le procédé reposant sur le suivi en continu du niveau de carburant dans son réservoir (1) et sur l'actionnement d'une pompe (4) injectant l'additif dans le réservoir (1), **caractérisé en ce que** la pompe (4) est actionnée lorsque un remplissage significatif de carburant est détecté par comparaison d'un ancien niveau conservé en mémoire avec un nouveau niveau de carburant évalué en sortie de ralenti.

2. Procédé d'additivation de carburant selon la revendication 1, **caractérisé en ce que** l'ancien niveau de carburant est mis en mémoire lors de la coupure du moteur, et réactualisé lorsque le ralenti est conservé pendant une durée déterminée.

3. Procédé d'additivation selon la revendication 1 ou 2, **caractérisé en ce que** l'ancien niveau de carburant est sauvegardé en mémoire morte après la coupure du moteur.

4. Procédé d'additivation de carburant selon la revendication 3, **caractérisé en ce que** l'ancien niveau de carburant est la dernière valeur moyennée du niveau de carburant réactualisée lors du passage au ralenti ou de la coupure du contact et mise en mémoire dans ce dernier cas.

5. Procédé d'additivation selon l'une des revendications précédentes, **caractérisé en ce qu'**on conserve en mémoire morte une valeur du volume total d'additif utilisée depuis le dernier plein d'un réservoir d'additif (3), et remise à zéro lors du plein de ce dernier.

6. Procédé d'additivation selon l'une des revendications précédentes, **caractérisé en ce qu'**on conserve en mémoire morte une valeur du volume total d'additif utilisé depuis le dernier lavage du filtre et réinitialisée lors du lavage du filtre à particules.

7. Procédé d'additivation selon l'une des revendications précédentes, **caractérisé en ce qu'**on conserve en mémoire morte la consommation totale de carburant vue par les injecteurs.

8. Procédé d'additivation selon l'une des revendications précédentes, **caractérisé en ce que** la quantité d'additif restant à injecter dans le carburant en cas de coupure du moteur avant la fin de l'additivation, est conservée en mémoire morte.

9. Procédé d'additivation selon l'une des revendications précédentes, **caractérisé en ce qu'**on conserve en mémoire morte l'état d'un commutateur à deux positions, qui est activé lorsqu'un remplissage de carburant est détecté.

10. Procédé d'additivation selon l'une des revendications précédentes, **caractérisé en ce que** la pompe (4) est actionnée pendant le temps nécessaire à l'obtention de la concentration d'additif souhaitée dans le carburant.

11. Procédé d'additivation selon l'une des revendications précédentes, **caractérisé en ce que** le niveau bas d'additif dans son réservoir (3) est déterminé en parallèle par un capteur de niveau bas (6), et par un calcul de différence entre le volume de remplissage maxi du réservoir et le volume d'additif consommé par la pompe (4).

12. Procédé d'additivation selon l'une des revendications précédentes, **caractérisé en ce que** le suivi de la consommation de carburant vue par les injecteurs du moteur, est exploité pour déclencher l'additivation en cas de remplissage non détecté ou de blocage d'une jauge de carburant (2) du réservoir (1).

13. Procédé d'additivation selon la revendication 12, **caractérisé en ce que** l'additivation déclenchée en situation de jauge bloquée ou en cas de remplissage non détecté est forfaitaire.

## Claims

1. A method of direct additive addition to the fuel consumed by an internal combustion engine associated with an exhaust line provided with a particle filter, the method being based on the continuous monitoring of the level of fuel in the fuel tank (1) and on the actuation of a pump (4) injecting the additive into the tank (1), **characterised in that** the pump (4) is actuated when significant fuel refilling is detected by comparing an old level stored in a memory with a new fuel level evaluated on ceasing idling.

2. A fuel additive addition method as claimed in claim 1, **characterised in that** the old fuel level is memorised when the engine is switched off, and updated when idling continues for a predetermined period.

3. An additive addition method as claimed in claim 1 or 2, **characterised in that** the old fuel level is stored in a read-only memory after the engine is switched off.

4. A fuel additive addition method as claimed in claim 3, **characterised in that** the old fuel level is the last averaged value of the fuel level updated during transition to idling or during switching off of the contact and is stored in memory in this latter case.

5. An additive addition method as claimed in one of the preceding claims, **characterised in that** a value of the total volume of additive used since an additive tank (3) was filled is stored in a read-only memory and is reset to zero when this tank is filled.

6. An additive addition method as claimed in one of the preceding claims, **characterised in that** a value of the total volume of additive used since the last washing of the filter is stored in a read-only memory and is re-initialised when the particle filter is washed.

7. An additive addition method as claimed in one of the preceding claims, **characterised in that** the total consumption of fuel by the injectors is stored in a read-only memory.

8. An additive addition method as claimed in one of the preceding claims, **characterised in that** the quantity of additive remaining to be injected into the fuel in the event that the engine is switched off before completion of the additivation is stored in a read-only memory.

9. An additive addition method as claimed in one of the preceding claims, **characterised in that** the state of a two-position switch, which is actuated when fuel refilling is detected, is stored in a read-only memory.

10. An additive addition method as claimed in one of the preceding claims, **characterised in that** the pump (4) is actuated for the time needed to obtain the desired concentration of additive in the fuel.

11. An additive addition method as claimed in one of the preceding claims, **characterised in that** a low level of additive in its tank (3) is determined in parallel by a low-level sensor (6) and by a calculation of the difference between the maximum filling volume of the tank and the volume of additive consumed by the pump (4).

12. An additive addition method as claimed in one of the preceding claims, **characterised in that** the monitoring of the fuel consumption by the injectors of the engine is processed in order to trigger additivation when refilling is not detected or a fuel gauge (2) of the tank (1) is blocked.

13. An additive addition method as claimed in claim 12, **characterised in that** the additivation triggered in the event of a blocked gauge or when refilling is not detected is fixed-rate.

## Patentansprüche

1. Verfahren zum direkten Zusetzen eines Additivs zu einem Kraftstoff, der von einem Verbrennungsmotor verbraucht wird, welcher einer mit einem Partikelfilter versehenen Abgasleitung zugeordnet ist, wobei das Verfahren darauf beruht, fortwährend den Füllstand des Kraftstoffes in dessen Tank (1) zu verfolgen und eine Pumpe (4) anzutreiben, die das Additiv in den Tank (1) einspritzt, **dadurch gekennzeichnet, dass** die Pumpe (4) angetrieben wird, wenn durch Vergleich eines alten, im Speicher gehaltenen Füllstandes mit einem neuen, beim Verlassen des Leerlaufs ermittelten Kraftstofffüllstand ein signifikatives Auffüllen des Kraftstoffes erfasst wird.

2. Verfahren zum Zusetzen eines Additivs zu einem Kraftstoff nach Anspruch 1, **dadurch gekennzeichnet, dass** der alte Kraftstofffüllstand beim Ausschalten des Motors gespeichert wird und wieder aktualisiert wird, wenn der Leerlauf während einer festgelegten Zeit beibehalten wird.

3. Verfahren zum Zusetzen eines Additivs nach Anspruch 1 oder 2, **dadurch gekennzeichnet, dass** der alte Kraftstofffüllstand nach dem Ausschalten des Motors in einem Permanentspeicher gespeichert wird.

4. Verfahren zum Zusetzen eines Additivs zu einem Kraftstoff nach Anspruch 3, **dadurch gekennzeichnet, dass** der alte Kraftstofffüllstand der letzte gemittelte Wert des Kraftstofffüllstandes ist, welcher beim Übergang in den Leerlauf oder beim Ausschalten wieder aktualisiert wird und im letzteren Fall gespeichert wird.

5. Verfahren zum Zusetzen eines Additivs nach einem der vorherigen Ansprüche, **dadurch gekennzeichnet, dass** man im Permanentspeicher einen Wert des seit dem letzten Befüllen eines Additivtanks (3) verwendeten Gesamtvolumens an Additiv hält, der beim Befüllen des letzteren wieder auf Null gesetzt wird.

6. Verfahren zum Zusetzen eines Additivs nach einem der vorherigen Ansprüche, **dadurch gekennzeichnet, dass** man im Permanentspeicher einen Wert des seit der letzten Reinigung des Filters verwendeten Gesamtvolumens an Additiv hält, der bei der Reinigung des Partikelfilters reinitialisiert wird.

7. Verfahren zum Zusetzen eines Additivs nach einem der vorherigen Ansprüche, **dadurch gekennzeichnet, dass** man im Permanentspeicher den durch die Einspritzanlage erfassten Gesamtkraftstoffverbrauch hält.

8. Verfahren zum Zusetzen eines Additivs nach einem der vorherigen Ansprüche, **dadurch gekennzeichnet, dass** die im Falle eines Ausschaltens des Motors vor dem Ende der Additivzusetzung noch in den Kraftstoff einzuspritzende Additivmenge im Permanentspeicher gehalten wird.

9. Verfahren zum Zusetzen eines Additivs nach einem der vorherigen Ansprüche, **dadurch gekennzeichnet, dass** man im Permanentspeicher den Zustand eines Schalters mit zwei Stellungen hält, der aktiviert wird, wenn ein Befüllen mit Kraftstoff erfasst wird.

10. Verfahren zum Zusetzen eines Additivs nach einem der vorherigen Ansprüche, **dadurch gekennzeichnet, dass** die Pumpe (4) während derjenigen Zeit angetrieben wird, die erforderlich ist, um die erwünschte Additivkonzentration im Kraftstoff zu erhalten.

11. Verfahren zum Zusetzen eines Additivs nach einem der vorherigen Ansprüche, **dadurch gekennzeichnet, dass** der Tiefstand an Additiv in dessen Tank (3) parallel durch einen Tiefstandsensor (6) und durch eine Differenzberechnung zwischen dem maximalen Füllvolumen des Tanks und dem durch die Pumpe (4) verbrauchten Additiwolumen bestimmt wird.

12. Verfahren zum Zusetzen eines Additivs nach einem der vorherigen Ansprüche, **dadurch gekennzeichnet, dass** das Verfolgen des durch die Einspritzanlage des Motors erfassten Kraftstoffverbrauchs ausgenutzt wird, um das Zusetzen des Additivs im Falle einer nicht erfassten Befüllung oder einem Blockieren eines Kraftstofffüllstandsmessers (2) des Tanks (1) auszulösen.

13. Verfahren zum Zusetzen eines Additivs nach Anspruch 12, **dadurch gekennzeichnet, dass** die Additivzusetzung, die im Zustand eines blockierten Füllstandsmessers oder im Falle einer nicht erfassten Befüllung ausgelöst wird, pauschal erfolgt.
